# EUROPEAN PATENT SPECIFICATION

(11) **EP 4 472 398 B1**
(45) Date of publication and mention of the grant of the patent: **02.12.2026**
(21) Application number: 22713472.3
(22) Date of filing: 01.02.2022
(51) Int. Cl.: A01D 34/90, F16F 7/00

(54) **SUSPENSION AND HANDLING DEVICE FOR PORTABLE AGRICULTURAL MACHINERY SUCH AS SHAKERS AND SIMILAR**
AUFHÄNGUNGS- UND HANDHABUNGSVORRICHTUNG FÜR TRAGBARE LANDWIRTSCHAFTLICHE MASCHINEN WIE RÜTTLER UND ÄHNLICHES
DISPOSITIF DE SUSPENSION ET DE MANUTENTION POUR MACHINES AGRICOLES PORTATIVES TELLES QUE LES SECOUEURS ET SIMILAIRES

(43) Date of publication of application: 11.12.2024
(73) Proprietor: Cifarelli S.p.A., 27058 Voghera (Pavia) (IT)
(72) Inventor: CIFARELLI, Roberto, 27058 Voghera (PV) (IT)
(74) Representative: Tarabbia, Luigi
(86) International application number: PCT/IT2022/000006
(87) International publication number: WO 2023/148789

(56) References cited:
- ES-A1- 2 233 168
- ES-U- 1 042 719
- ES-U- 1 059 305
- US-A1- 2010 012 338

## Description

The present invention relates to a portable agricultural tool, such as a shaker or the like.

Usually, such tools are used for the care of gardens, fields, and/or forests.

From the constitutive point of view, a portable agricultural tool of a type known in the technical field pertaining to the present invention, comprises a machine body, a connection apparatus and a hand-held portion.

The machine body comprises a central portion extending along a main axis and, mounted on opposite sides of said central portion, a tool and a drive motor of the tool. In particular, the drive motor is configured to generate an alternating force having at least one component parallel to the main axis.

The hand-held portion is operatively manually graspable by an operator and extends at least partially along a respective auxiliary axis which is parallel to the aforesaid main axis.

The connection apparatus is interposed between the machine body and the hand-held portion. In particular, the connection apparatus is adapted to connect the machine body in suspension to the hand-held portion and is configured to attenuate the alternating force transmitted by the drive motor to the hand-held portion in order to improve the comfort of the operator during use of the portable agricultural tool.

For example, it is known from ES2233168 a motion component absorbing and isolating element comprising an elongated, annular body shaped as a band and made of a resilient and tough material; such body defines two elongated lengths facing each other, said lengths being connected to each other through curved end links. First and second fastening members connect said elongated lengths to respective first and second portions being likely to effect relative motions, while said second member connects the body to said second portion through a second body having an analogous configuration and through a third fastening member. When facing the motion components the bodies, this device operate by means of longitudinal shifting motions of the elongated lengths in mutually perpendicular directions and by means of motions of the elongated lengths in another direction being perpendicular to the previous ones, these latter motions bringing said lengths closer together or farther apart from each other.

It is also known from ES1059305 a vibration-damped connecting device for connecting a handle to a portable vibrating machine comprising one connecting piece with a first end connected to said handle and a second end connected to a fixed/integral anchor of a chassis/casing of said machine, allowing said connection piece a relative movement between the handle and said chassis/casing in at least one first direction; this device comprises at least one linking member in the form of a flexible annular band with a first flat section attached to said second end of said connection piece, a second flat section, opposite and parallel to the first, fixed to said anchor, and a pair of curved sections that link the prime and second flat sections at their ends, the linking member being arranged to allow relative movement between the second end of the connection piece and the anchor mainly in a second direction transverse to said first direction.

It is furtherly known from ES1042719 U an antivibrant handle, with control coupled to vibrating machines, which is formed by an axis in whose extremes the supports and handles are formed by a vertical zone, one of which extremes is configured according to a zone that is solidarized by the means adequate to the machine, while the axis is covered in its central zone by a sliding shirt and is at their time by a grip handle, bearing on both sides elastic media such as compression springs covered by a dust guard or bellow.

Last but not least, it is known from US2010/012338 a bush cutter including: a pole; a working part that is provided at one end of the pole; an engine part that drives the working part and that is provided at the other end of the pole; a drive shaft that connects the working part and the engine part; a manoeuvring handle that is provided on an intermediate portion of the pole along a length direction thereof; and a vibration isolating member that is interposed between the manoeuvring handle and the pole.

Agricultural tools of the known type, even in their most modern implementations, have some structural, operational and/or economic/productive disadvantages which make the use and creation thereof problematic.

Firstly, the connection portions of the known devices are poorly performing. In other words, the connection portions of the agricultural tools of the known type are functionally inefficient in attenuating the forces which are generated on the hand-held portion during use to the disadvantage of the comfort and well-being of the operator.

Therefore, the technical task of the present invention is to provide a portable agricultural tool which does not present the same drawbacks inherent in the currently known art.

None the less, an object of the present invention is to provide a portable agricultural tool which ensures optimal conditions of comfort and well-being to the operator during the steps of use of the portable agricultural tool.

A further object of the present invention is to provide a portable agricultural tool which is extremely performing.

The specified technical task and the specified objects are substantially achieved by a portable agricultural tool object of the present invention, as detailed in the contents of the claims below and/or in the contents of the present disclosure.

In the present disclosure, the term "portable agricultural tool" is intended to mean a portable motorized tool which is used in the care of gardens, fields, and/or forests.

Preferably, but not limitedly, the portable agricultural tool is of the type known in the technical field pertaining to the present invention with the term "shaker" (but depending on the needs of the moment it can also be a "blower" or similar portable machinery).

The specified technical task and the specified objects are substantially achieved by a portable agricultural tool comprising a machine body, a hand-held portion and a connection apparatus.

The machine body comprises a central portion extending along a main axis. The machine body further comprises a tool and a drive motor of the tool mounted on opposite sides of the central portion.

The drive motor is configured to generate an alternating force at least along the main axis.

In other words, the drive motor is configured to move the tool so that it performs an alternating movement (forwards and backwards) along a trajectory which has at least one component parallel to the main axis.

Preferably, the drive motor is configured to move the tool so that it performs an alternating movement (forwards and backwards) substantially parallel to the main axis.

According to an example, the tool comprises a vibrating rod whose operating end is coupled or couplable to a gripping hook.

The hand-held portion is operatively manually graspable by a user. In other words, during proper use of the portable agricultural tool, the operator holds the portable agricultural tool by grasping the hand-held portion.

Such a hand-held portion has a hand-held rod extending along a respective auxiliary axis. Such an auxiliary axis is parallel to the main axis.

According to an example, the hand-held portion can further comprise handles or other ergonomic portions, which facilitate gripping the hand-held portion itself. Such ergonomic handles or portions can extend away from the hand-held rod and can extend transversely to the hand-held rod.

The connection apparatus is interposed between the central portion of the machine body and the hand-held portion. The connection apparatus is adapted to connect the machine body in suspension to the hand-held portion.

Functionally, the connection apparatus is configured to attenuate the alternating force transmitted by the drive motor to the hand-held portion.

The connection apparatus comprises a fixing element operatively and integrally constrained to the hand-held rod.

The connection apparatus further comprises a front connection arm and a rear connection arm.

The front arm has a respective first end constrained to the central portion of the machine body.

According to an example, the first end of the front arm can be directly constrained to the central portion of the machine body.

According to a further example, the machine body can comprise a rod-like portion coaxial to the main axis, on which at least one front transverse appendage is stably mounted. In particular, in such an example, the front transverse appendage is connected to the first end of the front arm in an eccentric portion with respect to the main axis. Preferably the front transverse appendage extends away from the main axis in the opposite direction to the hand-held portion and still more preferably is perpendicular to the main axis.

Preferably, regardless of the presence or not of the front transverse appendage, the first end of the front arm is hinged to the machine body.

Even more preferably but not limitingly, the first end of the front arm has a hinge provided with one or more grooved elastic plugs for defining respective torsional plugs contrasting the rotation of the front arm.

Advantageously, such a technical feature allows to optimize the action of attenuation of the alternating force generated by the drive motor, improving the efficiency of the connection apparatus.

The front arm also has a respective connection portion, distal from the first end of the front arm and applied to the hand-held portion.

According to an example, the connection portion of the front arm is defined by a second end of the front arm, opposite the first end of the front arm.

According to an aspect, the connection portion of the front arm can be defined by a respective hinge arranged in a sliding position along the hand-held portion and defining a respective oscillation axis perpendicular to the main axis and the auxiliary axis.

Alternatively, the connection portion of the front arm can be defined by a respective hinge arranged in a fixed position along the hand-held portion and defining a respective oscillation axis perpendicular to the main axis and the auxiliary axis.

Also, the rear arm has a respective first end constrained to the central portion of the machine body.

According to an example, the first end of the rear arm can be directly constrained to the central portion of the machine body.

According to a further example, the machine body can comprise a rod-like portion coaxial to the main axis, on which at least one rear transverse appendage is stably mounted. In particular, in such an example, the rear transverse appendage is connected to the first end of the rear arm in an eccentric portion with respect to the main axis. Preferably the rear transverse appendage extends away from the main axis in the opposite direction to the hand-held portion and still more preferably is perpendicular to the main axis.

Preferably, regardless of the presence or not of the rear transverse appendage, the first end of the rear arm is hinged to the machine body.

Even more preferably but not limitingly, the first end of the rear arm has a hinge provided with one or more grooved elastic plugs for defining respective torsional plugs contrasting the rotation of the rear arm.

Advantageously, such a technical feature allows to optimize the action of attenuation of the alternating force generated by the drive motor, improving the efficiency of the connection apparatus.

The rear arm also has a respective connection portion, distal from the first end of the rear arm and applied to the hand-held portion.

According to an example, the connection portion of the rear arm is defined by a second end of the rear arm, opposite the first end of the rear arm.

According to an aspect, the connection portion of the rear arm can be defined by a respective hinge arranged in a sliding position along the hand-held portion and defining a respective oscillation axis perpendicular to the main axis and the auxiliary axis.

Alternatively, the connection portion of the rear arm can be defined by a respective hinge arranged in a fixed position along the hand-held portion and defining a respective oscillation axis perpendicular to the main axis and the auxiliary axis.

According to a further aspect, the first and second connection portions are arranged on opposite sides of the fixing element.

The connection apparatus further comprises an attenuation assembly configured to attenuate the alternating force transmitted by the drive motor to the hand-held portion.

The attenuation assembly comprises a front elastic element and a rear elastic element.

According to an aspect, the elastic element is interposed between the front arm and the fixing element while the rear elastic element is interposed between the rear arm and the fixing element.

According to an example, the front and rear elastic elements can comprise elastic plugs.

According to a further example, the front and rear elastic elements can comprise tubular bellows elements.

According to a further example, the front and rear elastic elements can comprise both elastic plugs and tubular bellows elements.

According to a further example, the front and rear elastic elements are made in the form of arms in deformable material, preferably elastomeric.

According to a further aspect, the front elastic element and the rear elastic element lie aligned on an attenuation axis parallel to the main axis and are opposite with respect to the fixing element.

Advantageously, such a technical feature determines an optimal attenuation of the alternating force generated by the drive motor, since the front and rear elastic elements operate in an opposite manner. In other words, for example, when the front elastic element is compressed, the rear elastic element is placed in traction and vice versa such that such front and rear elastic elements can operate in synergy.

According to a further aspect, regardless of the mutual arrangement of the front elastic element and the rear elastic element, at least one of the front elastic element and the rear elastic element can be in a state of pretension or a state of pre-compression.

In other words, at least one of the front and rear elastic elements, preferably both, are mounted on the portable agricultural tool so that they result in a pre-tensioning state or in a pre-compression state even in a non-operating state (off) of the portable agricultural tool.

According to an example, only between the front elastic element and the rear elastic element results in a pre-tensioning state.

According to a further example, only between the front elastic element and the rear elastic element results in a pre-compression state.

According to a further example, both the front and rear elastic elements result in a pre-tensioning state.

According to a further example, both the front and rear elastic elements result in a pre-compression state.

Advantageously, such a technical feature allows a better response of the front and rear elastic elements to the alternating force generated by the drive motor.

According to a further aspect, the fixing element can be configured to change a value of the pre-tensioning state or the pre-compression state of the front elastic element and/or the rear elastic element.

Advantageously, such a technical feature allows to adjust the response action of the front elastic element and/or the rear elastic element to the alternating force generated by the drive motor, so that the operator can adapt the portable agricultural tool to his needs.

According to a further aspect, the fixing element can be at least partially made of an elastically deformable material.

Advantageously, such a feature allows the elastic element to participate in the response action of the front elastic element and the rear elastic element during operations so as to improve the efficiency of the connection apparatus.

The aforesaid portable agricultural tool achieves the proposed objects, eliminating the highlighted drawbacks of the prior art.

Such a result is achieved in particular by the use of the front elastic element and the rear elastic element.

Such a result can also be achieved by using the front elastic element and the rear elastic element in cooperation with the hinges of the front arm and the rear arm provided with one or more grooved elastic plugs to define respective torsional plugs.

Likewise, such a result can be achieved by using only the hinges of the front arm and the rear arm provided with one or more grooved elastic plugs to define respective torsional plugs, regardless of the presence of the front elastic element and the rear elastic element or in any case of the other structural features illustrated below.

The specified technical task and the specified objects are substantially achieved by a further portable agricultural tool comprising a machine body, a hand-held portion and a connection apparatus.

The machine body comprises a central portion extending along a main axis. The machine body further comprises a tool and a drive motor of the tool mounted on opposite sides of the central portion.

The drive motor is configured to generate an alternating force at least along the main axis.

In other words, the drive motor is configured to move the tool so that it performs an alternating movement (forwards and backwards) along a trajectory which has at least one component parallel to the main axis.

Preferably, the drive motor is configured to move the tool so that it performs an alternating movement (forwards and backwards) substantially parallel to the main axis.

According to an example, the tool comprises a vibrating rod whose operating end is coupled or couplable to a gripping hook.

The hand-held portion is operatively manually graspable by a user. In other words, during proper use of the portable agricultural tool, the operator holds the portable agricultural tool by grasping the hand-held portion.

Such a hand-held portion has a hand-held rod extending along a respective auxiliary axis. Such an auxiliary axis is parallel to the main axis.

According to an example, the hand-held portion can further comprise handles or other ergonomic portions, which facilitate gripping the hand-held portion itself. Such ergonomic handles or portions can extend away from the hand-held rod and can extend transversely to the hand-held rod.

The connection apparatus is interposed between the central portion of the machine body and the hand-held portion. The connection apparatus is adapted to connect the machine body in suspension to the hand-held portion.

Functionally, the connection apparatus is configured to attenuate the alternating force transmitted by the drive motor to the hand-held portion.

The connection apparatus comprises a front connection arm and a rear connection arm.

The front arm has a respective first end constrained to the central portion of the machine body.

According to an example, the first end of the front arm can be directly constrained to the central portion of the machine body.

According to a further example, the machine body can comprise a rod-like portion coaxial to the main axis, on which at least one front transverse appendage is stably mounted. In particular, in such an example, the front transverse appendage is connected to the first end of the front arm in an eccentric portion with respect to the main axis. Preferably the front transverse appendage extends away from the main axis in the opposite direction to the hand-held portion and still more preferably is perpendicular to the main axis.

Regardless of the presence or not of the front transverse appendage, the first end of the front arm is hinged to the machine body.

Preferably, the first end of the front arm has a hinge provided with one or more grooved elastic plugs for defining respective torsional plugs contrasting the rotation of the front arm with respect to the machine body.

Structurally, the machine body can define a seat having a polygonal section, preferably square. The first end of the front arm has a pin which also has a polygonal section, preferably square. One or more grooved elastic plugs are placed between the seat and the pin. Functionally, when the front arm rotates, such one or more elastic plugs store a potential elastic energy which can be transformed into work, generating a mechanical thrust which can be exerted on the front arm in contrast to its rotation.

Advantageously, such a technical feature allows to optimize the action of attenuation of the alternating force generated by the drive motor, improving the efficiency of the connection apparatus.

The front arm also has a respective connection portion, distal from the first end of the front arm and applied to the hand-held portion.

Preferably, the connection portion of the front arm is defined by a second end of the front arm, opposite the first end of the front arm.

In particular, the connection portion of the front arm is hinged to the hand-held rod.

The connection portion of the front arm can be defined by a respective hinge arranged in a fixed position along the hand-held portion and defining a respective oscillation axis perpendicular to the main axis and the auxiliary axis.

Preferably, the connection portion of the front arm has a hinge provided with one or more grooved elastic plugs for defining respective torsional plugs contrasting the rotation of the front arm with respect to the hand-held portion.

Structurally, the hand-held rod can define a seat having a polygonal section, preferably square. The connection portion of the front arm has a pin which also has a polygonal section, preferably square. One or more grooved elastic plugs are placed between the seat and the pin.

Functionally, when the front arm rotates, such one or more elastic plugs store a potential elastic energy which can be transformed into work, generating a mechanical thrust which can be exerted on the front arm in contrast to its rotation with respect to the hand-held portion.

Advantageously, such a technical feature allows to optimize the action of attenuation of the alternating force generated by the drive motor, improving the efficiency of the connection apparatus.

Also, the rear arm has a respective first end constrained to the central portion of the machine body.

According to an example, the first end of the rear arm can be directly constrained to the central portion of the machine body.

According to a further example, the machine body can comprise a rod-like portion coaxial to the main axis, on which at least one rear transverse appendage is stably mounted. In particular, in such an example, the rear transverse appendage is connected to the first end of the rear arm in an eccentric portion with respect to the main axis. Preferably the rear transverse appendage extends away from the main axis in the opposite direction to the hand-held portion and still more preferably is perpendicular to the main axis.

Regardless of the presence or not of the rear transverse appendage, the first end of the rear arm is hinged to the machine body.

Preferably, the first end of the rear arm has a hinge provided with one or more grooved elastic plugs for defining respective torsional plugs contrasting the rotation of the rear arm with respect to the machine body.

Structurally, the machine body can define a seat having a polygonal section, preferably square. The first end of the rear arm has a pin which also has a polygonal section, preferably square. One or more grooved elastic plugs are placed between the seat and the pin. Functionally, when the rear arm rotates, such one or more elastic plugs store a potential elastic energy which can be transformed into work, generating a mechanical thrust which can be exerted on the rear arm in contrast to its rotation.

Advantageously, such a technical feature allows to optimize the action of attenuation of the alternating force generated by the drive motor, improving the efficiency of the connection apparatus.

The rear arm also has a respective connection portion, distal from the first end of the rear arm and applied to the hand-held portion.

Preferably, the connection portion of the rear arm is defined by a second end of the rear arm, opposite the first end of the rear arm.

In particular, the connection portion of the rear arm is hinged to the hand-held rod.

The connection portion of the rear arm can be defined by a respective hinge arranged in a fixed position along the hand-held portion and defining a respective oscillation axis perpendicular to the main axis and the auxiliary axis.

Preferably, the connection portion of the rear arm has a hinge provided with one or more grooved elastic plugs for defining respective torsional plugs contrasting the rotation of the rear arm with respect to the hand-held portion.

Structurally, the hand-held rod can define a seat having a polygonal section, preferably square. The connection portion of the rear arm has a pin which also has a polygonal section, preferably square. One or more grooved elastic plugs are placed between the seat and the pin.

Functionally, when the rear arm rotates, such one or more elastic plugs store a potential elastic energy which can be transformed into work, generating a mechanical thrust which can be exerted on the rear arm in contrast to its rotation with respect to the hand-held portion.

Advantageously, such a technical feature allows to optimize the action of attenuation of the alternating force generated by the drive motor, improving the efficiency of the connection apparatus.

Functionally, in such an embodiment, the kinematic chain defined by the machine body, the hand-held portion and the front and rear arms defines an articulated quadrilateral, preferably flat.

The articulation pins of such an articulated quadrilateral are defined by the hinges of the front arm, respectively with the machine body and with the hand-held portion, and by the hinges of the rear arm, respectively with the machine body and with the hand-held portion.

According to an example, all the hinges are provided with grooved elastic plugs to define respective torsional plugs.

According to an example, only the hinges defined by the front and rear arms with the machine body are provided with grooved elastic plugs to define respective torsional dowels.

According to an example, only the hinges defined by the front and rear arms with the hand-held portion are provided with grooved elastic plugs to define respective torsional plugs.

The aforesaid portable agricultural tool achieves the proposed objects, eliminating the highlighted drawbacks of the prior art.

Further features and advantages of the present invention will become more apparent from the indicative, and therefore non-limiting description of one or more embodiments of a portable agricultural tool.

Such a description will be set out hereinafter with reference to the accompanying drawings given only for illustrative and, therefore, non-limiting purpose, in which:
- figure 1 is a schematic view of a first embodiment, exemplary and therefore non-limiting, of a portable agricultural tool in accordance with the present invention;
- figure 2 is a sectional view of the embodiment of figure 1;
- figure 3 is an exploded view of the embodiment of figure 1;
- figure 4 is a schematic view of a second embodiment, exemplary and therefore non-limiting, of a portable agricultural tool in accordance with the present invention;
- figure 5 is a sectional view of the embodiment of figure 4;
- figure 6 is an exploded view of the embodiment of figure 4.
- figure 7 is a schematic view of a further embodiment, exemplary and therefore non-limiting, of a portable agricultural tool in accordance with the present invention;
- figure 8 is a schematic view of a further embodiment, exemplary and therefore non-limiting, of a portable agricultural tool in accordance with the present invention;
- figure 9 is a schematic view of a further embodiment, exemplary and therefore non-limiting, of a portable agricultural tool in accordance with the present.

With reference to the accompanying drawings, the reference numeral "1" globally indicates a portable agricultural tool in accordance with the present invention.

Preferably, the portable agricultural tool 1 is a shaker.

The portable agricultural tool 1 comprises a machine body 100, a hand-held portion 200 and a connection apparatus 300.

The machine body 100 comprises a central portion 100a extending along a main axis "X".

The machine body 100 further comprises a tool 101 and a drive motor 102 of the tool mounted on opposite sides of the central portion 100a.

The drive motor 102 is configured to generate an alternating force at least along the main axis (X).

Preferably, the tool 101 comprises a vibrating rod 101a whose operating end is coupled or couplable to a gripping hook, not shown in the accompanying drawings.

The hand-held portion 200 is operatively manually graspable by a user. Such a hand-held portion 200 has a hand-held rod 201 extending along a respective auxiliary axis "Y" parallel to the main axis "X".

Preferably, the hand-held portion 200 comprises handles or other ergonomic portions, not illustrated in the accompanying drawings, which facilitate gripping the hand-held portion itself.

The connection apparatus 300 is interposed between the central portion 100a of the machine body 100 and the hand-held portion 200.

The connection apparatus 300 is configured to connect the machine body 100 in suspension to the hand-held portion 200.

Functionally, moreover, the connection apparatus 300 is configured to attenuate the alternating force transmitted from the drive motor 102 to the hand-held portion 200.

Structurally, the connection apparatus 300 comprises a fixing element 301, a front connection arm 2302, a rear connection arm 303, and an attenuation assembly 304.

The fixing element 301 is operatively and integrally constrained to the hand-held rod 201.

Structurally, the front arm 302 has an arcuate structure. In particular, the front arm 302 has two symmetrical portions which at least partially embrace the machine body 100.

The front arm 302 has a respective first end 302a constrained to the central portion 100a of the machine body 100.

In particular, the machine body 100 comprises a rod-like portion 100b coaxial with the main axis "X", on which a front transverse appendage 104 is stably mounted.

The front transverse appendage 104 is connected to the first end 302a of the front arm 302 in an eccentric portion with respect to the main axis "X". Preferably the front transverse appendage extends away from the main axis "X" in the opposite direction to the hand-held portion 200 and even more preferably is perpendicular to the main axis "X".

The first end 302a of the front arm 302 is hinged to the machine body 100. Preferably, the first end 302a of the front arm 302 has a hinge 302f provided with one or more grooved elastic plugs 105 for defining respective torsional plugs contrasting the rotation of the front arm 302.

Advantageously, such a technical feature allows to optimize the action of attenuation of the alternating force generated by the drive motor 102, improving the efficiency of the connection apparatus 300.

The front arm 302 also has a respective connection portion 302b, distal from the first end 302a of the front arm 302 and applied to the hand-held portion 200.

Specifically, the connection portion 302b of the front arm 302 is defined by a respective hinge 302c arranged in a sliding position along the hand-held portion 200 and defining a respective oscillation axis perpendicular to the main axis "X" and the auxiliary axis "Y".

Structurally, the rear arm 303 has an arcuate structure. In particular, the rear arm 303 has two symmetrical portions which at least partially embrace the machine body 100.

The rear arm 303 has a respective first end 303a constrained to the central portion 100a of the machine body 100. In particular, the first end 303a of the rear arm 303 is hinged to the machine body 100.

In particular, the machine body 100 comprises a rod-like portion 100b coaxial with the main axis "X", on which a rear transverse appendage 106 is stably mounted.

The rear transverse appendage 106 is connected to the first end 303a of the rear arm 303 in an eccentric portion with respect to the main axis "X". Preferably the rear transverse appendage 106 extends away from the main axis "X" in the opposite direction to the hand-held portion 200 and even more preferably is perpendicular to the main axis "X".

Preferably, the first end 303a of the rear arm 303 has a hinge 303f provided with one or more grooved elastic plugs 105 for defining respective torsional plugs contrasting the rotation of the rear arm 303.

Advantageously, such a technical feature allows to optimize the action of attenuation of the alternating force generated by the drive motor 102, improving the efficiency of the connection apparatus 300.

The rear arm 303 also has a respective connection portion 303b, distal from the first end 303a of the rear arm 303 and applied to the hand-held portion 200.

Specifically, the connection portion 303b of the rear arm 303 is defined by a hinge 303c arranged in a respective sliding position along the hand-held portion 200 and defining a respective oscillation axis perpendicular to the main axis "X" and the auxiliary axis "Y".

The connection portion 302b of the front arm 302 and the connection portion 303b of the rear arm 303 are arranged on opposite sides of the fixing element 301.

The attenuation assembly 304 is configured to attenuate the alternating force transmitted from the drive motor 102 to the hand-held portion 200.

The attenuation assembly 304 comprises at least one elastic element 304a (or, depending on the needs of the moment, also two or more elastic elements, as illustrated in the accompanying drawings in which a front elastic element 304a and a rear elastic element 304b are seen).

In particular, in the embodiment illustrated in the accompanying drawings, the front elastic element 304a is interposed between the front arm 302 and the fixing element 301 while the rear elastic element 304b is interposed between the rear arm 303 and the fixing element 301.

However, where the invention in_for the presence of only one elastic element, this can be active and/or interposed between the front arm 302 and the fixing element 301 (or can also be active and/or interposed between the fixing element 301 and the rear arm 303), but depending on the needs of the moment can also be positioned and/or keyed externally with respect to the gap between the front arm 302 and the rear arm 303 (e.g., the single elastic element can be placed in front of the front arm 302 or rear arm 303).

Still more generally, where the needs of the moment include the presence of two or more elastic elements, one of them can be interposed "internally" between the front arm 302 and the rear arm 303, or both can be positioned externally to the gap between the front arm 302 and the rear arm 303 (or again, one of the two elastic elements can be interposed between the front arm 302 and the rear arm 303 while the other can be placed externally to the "internal" space between the front arm 302 and the rear arm 303, always keeping in a keyed condition along the "Y" axis of the hand-held rod 201 or in any case being keyed on an "auxiliary" work axis "Z" substantially parallel to the hand-held rod 201 but offset with respect to the extension axis of the hand-held rod 201 itself, as will be exemplified below).

As can be seen in the figures, the front elastic element 304a and the rear elastic element 304b lie aligned on an attenuation axis "Z" parallel to the main axis "X" and are opposite with respect to the fixing element 301.

In terms of the positioning and working axes of the elastic elements functionally comprised in the attenuation assembly 304, it can be observed, also with reference to the various embodiments indicated above, that one or more elastic elements can work positioned and/or keyed on the axis "Y" defined by the hand-held rod 201 or on an axis "Z" parallel to this axis "Y": this implies that the axis "Y" and the axis "Z" can be coincident or can be spatially offset (while maintaining a relationship of mutual parallelism).

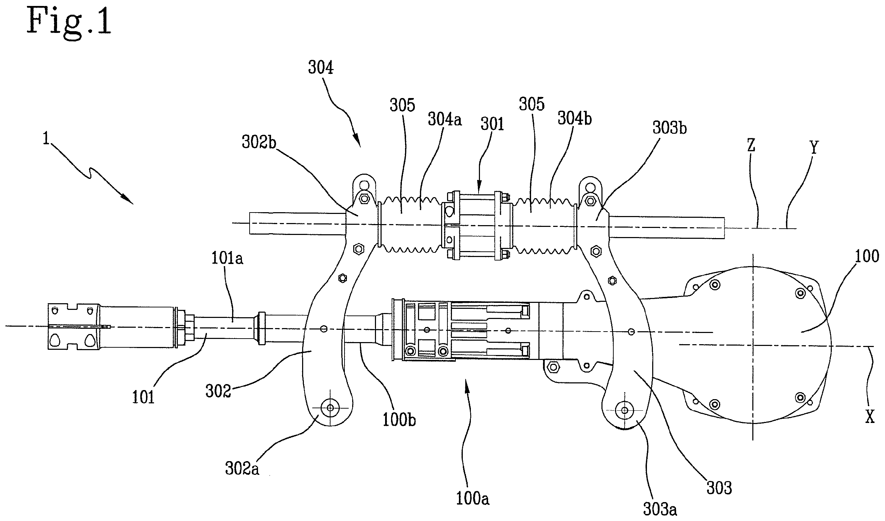

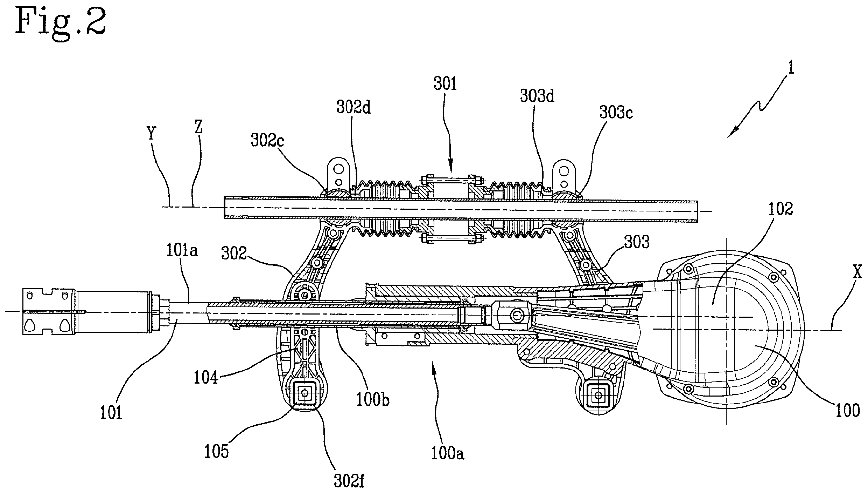

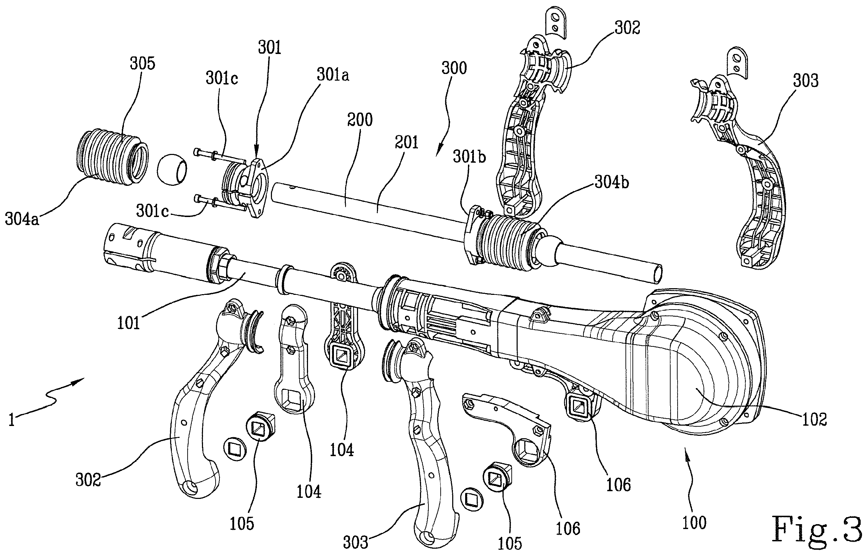

Figures 1, 2 and 3 illustrate, by way of example, a preferred embodiment of the connection apparatus 300.

In such an embodiment, the front elastic element 304a is interposed between the connection portion 302b of the front arm 302 and the fixing element 301 while the rear elastic element 304b is interposed between the connection portion 302b of the rear arm 303 and the fixing element 301.

The front and rear elastic elements 304a, 304b are coaxial with each other and arranged around the auxiliary axis "Y", in particular they are arranged coaxially to the auxiliary axis "Y".

The front and rear elastic elements 304a, 304b comprise tubular bellows elements 305 and/or elastic plugs.

Structurally, the front and rear arms 302, 303 have respective thrust surfaces 302d, 303d arranged in contact with the respective front or rear elastic element 303b, 304b.

Such thrust surfaces 302d, 303d are configured to determine a compression of the elastic element 304a, 304b following the rotation of the arm 302, 303, preferably to determine a same compression of the elastic element 304a, 304b following opposite rotation of the arm 302, 303 with respect to a reference position.

Preferably, the front elastic element 304a and the rear elastic element 304b are in a pre-tensioning or pre-compression state.

Preferably, furthermore, the fixing element 301 can be configured to change a value of the pre-tensioning state or the pre-compression state of the front elastic element 304a and/or the rear elastic element 304b.

Structurally, in such an embodiment, the fixing element 301 has two attachment flanges 301a, 301b whose distance is adjustable by means of respective threaded members 301c.

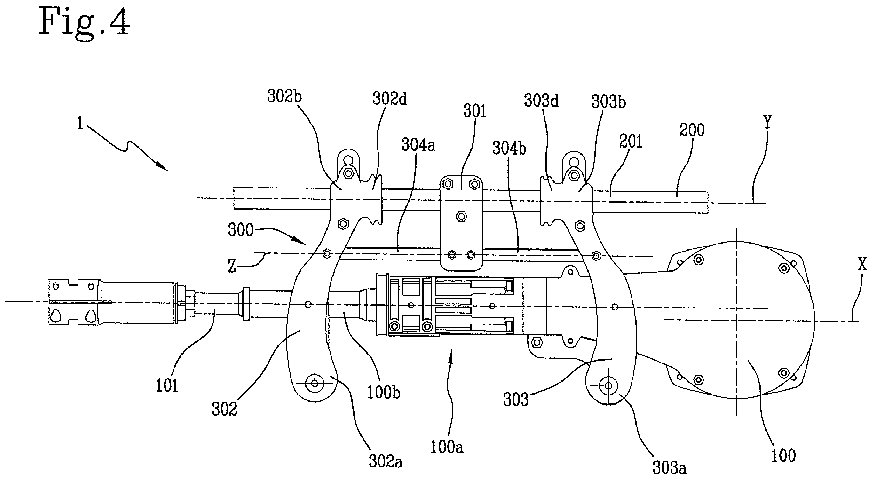

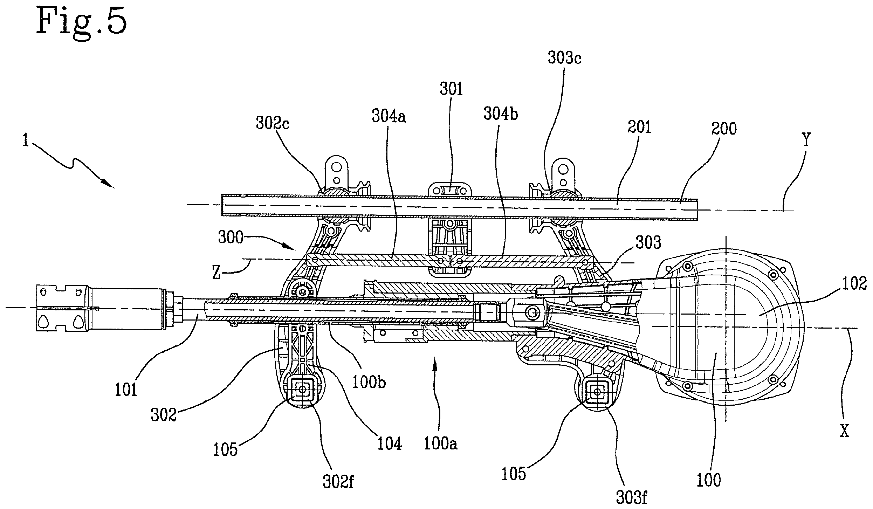

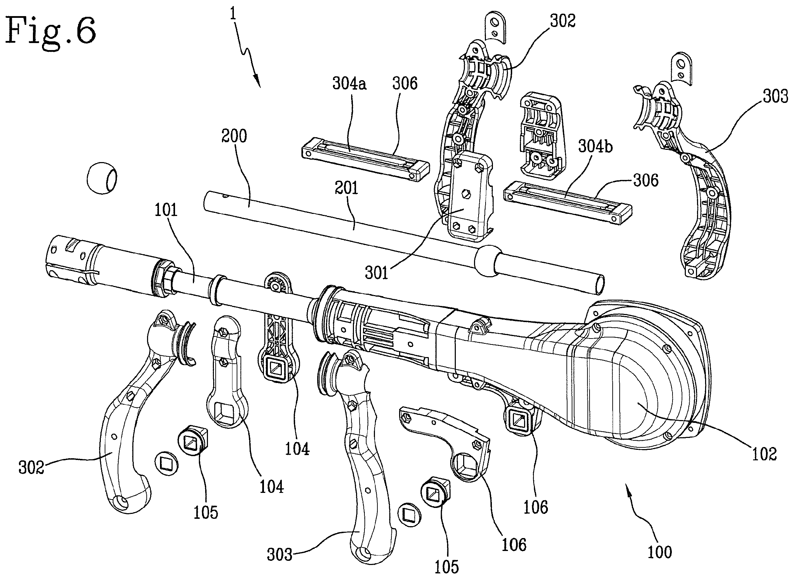

Figures 4, 5 and 6 illustrate, by way of non-limiting example, a further embodiment of the connection apparatus 300.

In such an embodiment, the front elastic element 304a is interposed between a central portion of the front arm 302 and the fixing element 301 and where the rear elastic element 304b is interposed between a central portion of the rear arm 303 and the fixing element 301, preferably so that the elastic elements 304a, 304b operate along an attenuation axis "Z" which is parallel and offset with respect to said auxiliary axis "Y".

The front and rear elastic elements 304a, 304b are made in the form of arms in deformable material 306, preferably elastomeric.

Still more preferably, the deformable material arms 306 are directly connected at a first end thereof to the respective front arm 302 or rear arm 303 and at the other end to a corresponding portion of the fixing element 301.

Preferably, moreover, the front elastic element 304a and the rear elastic element 304b are both in a pre-tensioning state.

Preferably, in such an embodiment, the fixing element 301 can be at least partially made of an elastically deformable material so that it can deform under the action of the alternating force generated by the drive motor 102 and cooperate with the front elastic element 304a and with the rear elastic element 304b so as to attenuate the aforesaid alternating force transmitted to the hand-held portion 200.

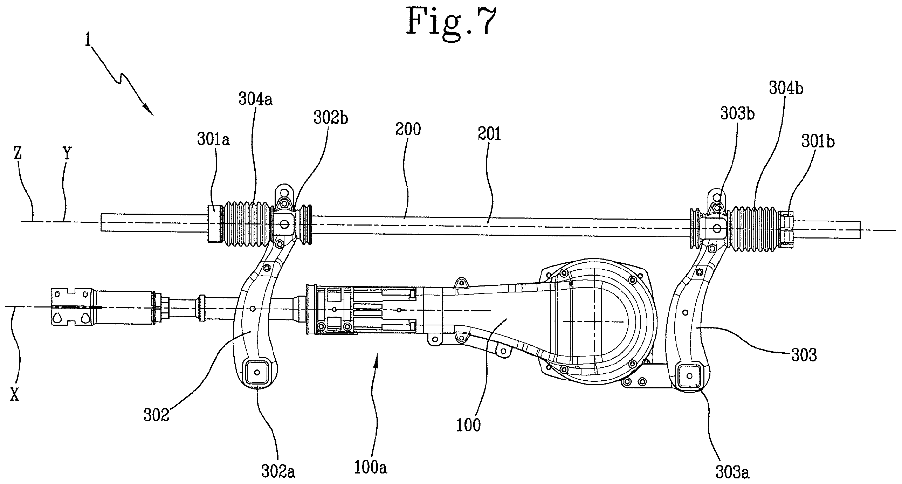

Figure 7 illustrates, by way of non-limiting example, a further embodiment of the connection apparatus 300.

Preferably, in such an embodiment, the attenuation axis "Z" coincides with the auxiliary axis "Y".

Preferably, moreover, the front elastic element 304a and the rear elastic element 304b are both in a pre-tensioning state.

In such an embodiment, the connection apparatus 300 comprises a first fixing element 301a and a second fixing element 301b.

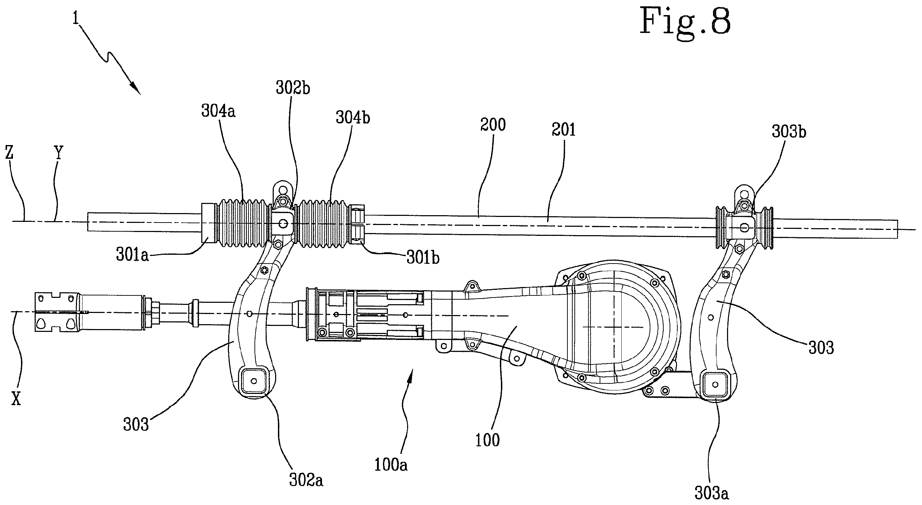

The front elastic element 304a is interposed between the front arm 302 and the first fixing element 301a while the rear elastic element 304b is interposed between the rear arm 303 and the second fixing element 301b. Figure 8 illustrates, by way of non-limiting example, a further embodiment of the connection apparatus 300.

Preferably, in such an embodiment, the attenuation axis "Z" coincides with the auxiliary axis "Y".

Preferably, moreover, the front elastic element 304a and the rear elastic element 304b are both in a pre-tensioning state.

In such an embodiment, the connection apparatus 300 comprises a first fixing element 301a and a second fixing element 301b.

The front elastic element 304a is interposed between the front arm 302 and the first fixing element 301a while the rear elastic element 304b is interposed between the front arm 302 and the second fixing element 301b.

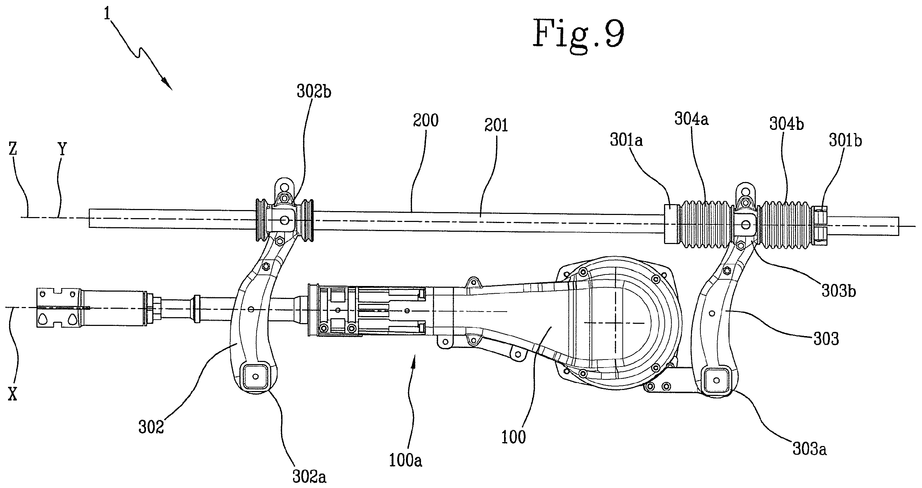

Figure 9 illustrates, by way of non-limiting example, a further embodiment of the connection apparatus 300.

Preferably, in such an embodiment, the attenuation axis "Z" coincides with the auxiliary axis "Y".

Preferably, moreover, the front elastic element 304a and the rear elastic element 304b are both in a pre-tensioning state.

In such an embodiment, the connection apparatus 300 comprises a first fixing element 301a and a second fixing element 301b.

The front elastic element 304a is interposed between the rear arm 303 and the first fixing element 301a while the rear elastic element 304b is interposed between the rear arm 303 and the second fixing element 301b.

The present invention achieves the proposed objects, eliminating the drawbacks highlighted by the prior art: in this regard, it should be noted first of all that the portable agricultural tool 1 as described and/or claimed ensures optimal conditions of comfort and well-being to the operator during the steps of use of the portable agricultural tool 1. In fact, the peculiar structure of the connection apparatus 300 allows to effectively attenuate the alternating force generated by the drive motor 102 and transmitted to the hand-held portion 200.

It should also be noted that the portable agricultural tool 1 is extremely efficient since, thanks to the possibility of effectively attenuating the alternating force transmitted to the hand-held portion 200, it is possible to increase the alternating force itself, minimizing, if not cancelling, the possible damage to the operator.

## Claims

1. Portable agricultural tool (1) for gardening or agriculture, comprising:
- a machine body (100) comprising a central portion extending along a main axis and, mounted on opposite sides of the central portion (100a), a tool (101) and a drive motor (102) of said tool (101), said drive motor (102) being configured to generate an alternating force at least along said main axis (X);
- a hand-held portion (200) operatively graspable by a user and having a hand-held rod (201) extending along a respective auxiliary axis (Y) parallel to said main axis (X);
- a connection apparatus (300) interposed between the central portion of said machine body (100) and said hand-held portion (200) to connect said machine body (100) in suspension to said hand-held portion (200), wherein said connection apparatus (300) comprises:
- a fixing element (301) operatively and integrally constrained to said hand-held rod (201);
- a front connection arm (302) having a first end (302a) constrained to said central portion of the machine body (100) and a connection portion (302b), distal from said first end (302a) of the front arm (302) and applied to said hand-held portion (200);
- a rear connection arm (303) having a first end (303a) constrained to said central portion of the machine body (100) and a connection portion (303b), distal from said first end (303a) of the rear arm (303) and applied to said hand-held portion (200), wherein said connection portions (302b, 303b) are arranged on opposite sides of the fixing element (301); and
- an attenuation assembly (304) configured to attenuate the alternating force transmitted by the drive motor (102) to the hand-held portion (200) and comprising an elastic element interposed between the front arm (302) and the fixing element (301) or interposed between the rear arm (303) and the fixing element (301), said elastic element lying aligned on an attenuation axis (Z) parallel to said main axis (X) and opposite with respect to said fixing element (301),
**Characterized in that**:
- said connection portions (302b, 303b) are defined by hinges (302c, 303c) arranged in a sliding position along the hand-held portion (200) and define oscillation axes perpendicular to said main axis (X) and to said auxiliary axis (Y); and
- the first ends (302a, 303a) of the front and rear arms (302, 303), in particular in the connection to the machine body (100), have hinges (302f, 303f) provided with grooved elastic plugs (105) to define respective torsional plugs contrasting the rotation of the arms (302, 303).

2. Portable agricultural tool according to claim 1, wherein said attenuation axis (Z) coincides with said auxiliary axis (Y).

3. Portable agricultural tool according to claim 1, wherein said attenuation axis (Z) is offset with respect to said auxiliary axis (Y).

4. Portable agricultural tool according to any one of the preceding claims, wherein the attenuation assembly (304) comprises a front elastic element (304a) interposed between the front arm (302) and the fixing element (301), and a rear elastic element (304b) interposed between the rear arm (303) and the fixing element (301), said front elastic element (304a) and said rear elastic element (304b) lying aligned on the auxiliary axis (Y) and/or on an attenuation axis (Z) parallel to said main axis (X) and opposite with respect to said fixing element (301).

5. Portable agricultural tool (1) according to claim 4, wherein the front elastic element (304a) is interposed between the connection portion (302b) of the front arm (302) and the fixing element (301) and wherein the rear elastic element (304b) is interposed between the connection portion (303b) of the rear arm (303) and the fixing element (301).

6. Portable agricultural tool (1) according to claim 5, wherein said front and rear elastic elements (304a, 304b) are coaxial with each other and arranged around said auxiliary axis (Y), in particular coaxial to said auxiliary axis (Y).

7. Portable agricultural tool (1) according to any one of the preceding claims from 4 to 6, wherein said front and rear elastic elements (304a, 304b) comprise elastic plugs and/or tubular bellows elements (305).

8. Portable agricultural tool (1) according to any one of the preceding claims from 4 to 7, wherein said front and rear arms (302, 303) have respective thrust surfaces (302d, 303d) arranged in contact with the respective front or rear elastic element (304a, 304b) and configured to determine a compression of the elastic element (304a, 304b) following the rotation of the arm (302, 303) and/or the translation of said arm (302, 303) with respect to said hand-held rod (201), preferably to determine the same compression of the elastic element (304a, 304b) following opposite rotations of the arm (302, 303) and/or following translations of the arm (302, 303) with respect to a reference position.

9. Portable agricultural tool (1) according to any one of the preceding claims from 4 to 8, wherein the front elastic element (304a) is interposed between a central portion of the front arm (302) and the fixing element (301) and wherein the rear elastic element (304b) is interposed between a central portion of the rear arm (303) and the fixing element (301), preferably so that said elastic elements (304a, 304b) operate along an attenuation axis (Z) which is parallel and offset with respect to said auxiliary axis (Y).

10. Portable agricultural tool (1) according to claim 9, wherein said front and rear elastic elements (304a, 304b) are made in the form of arms in deformable material (306), preferably elastomeric, preferably said arms in deformable material (306) being directly connected at a first end to the respective front (302) or rear (303) arm and at the other end to a corresponding portion of the fixing element (301).

11. Portable agricultural tool (1) according to any one of the preceding claims from 4 to 10, wherein the front elastic element (304a) and the rear elastic element (304b) are in a pre-tensioning state or in a pre-compression state.

12. Portable agricultural tool (1) according to claim 11, wherein said fixing element (301) is configured to change a value of the pre-tensioning state or the pre-compression state of said front elastic element (304a) and/or of said rear elastic element (304b).

13. Portable agricultural tool (1) according to any one of the preceding claims, wherein the machine body (100) comprises a rod-like portion coaxial to said main axis (X) and on which a front transverse appendage (104) and a rear transverse appendage (106) are stably mounted, said front transverse appendage (104) and said rear transverse appendage (106) being respectively connected, in eccentric portions with respect to said main axis (X), to the first end (302a) of the front arm (302) and to the first end (303a) of the rear arm (303); preferably said front transverse appendage (104) and said rear transverse appendage (106) extending away from the main axis (X) in the direction opposite the hand-held portion (200) and more preferably being perpendicular to the main axis (X).

## Patentansprüche

1. Tragbares landwirtschaftliches Werkzeug (1) für den Gartenbau oder die Landwirtschaft, umfassend:
- einen Maschinenkörper (100), der einen sich entlang einer Hauptachse erstreckenden Mittelabschnitt sowie ein an gegenüberliegenden Seiten des Mittelabschnitts (100a) angebrachtes Werkzeug (101) und einen Antriebsmotor (102) des Werkzeugs (101) umfasst, wobei der Antriebsmotor (102) dazu ausgebildet ist, eine Wechselkraft zumindest entlang der Hauptachse (X) zu erzeugen;
- einen handgeführten Abschnitt (200), der von einem Benutzer betriebsgemäß ergreifbar ist und einen handgeführten Stab (201) aufweist, der sich entlang einer jeweiligen Hilfsachse (Y) parallel zur Hauptachse (X) erstreckt;
- eine Verbindungsvorrichtung (300), die zwischen dem Mittelabschnitt des Maschinenkörpers (100) und dem handgeführten Abschnitt (200) angeordnet ist, um den Maschinenkörper (100) in Aufhängung mit dem handgeführten Abschnitt (200) zu verbinden, wobei die Verbindungsvorrichtung (300) umfasst:
- ein Befestigungselement (301), das betriebsgemäß und einstückig mit dem handgeführten Stab (201) verbunden ist;
- einen vorderen Verbindungsarm (302), der ein erstes Ende (302a), das mit dem Mittelabschnitt des Maschinenkörpers (100) verbunden ist, und einen Verbindungsabschnitt (302b) aufweist, der von dem ersten Ende (302a) des vorderen Arms (302) entfernt ist und an dem handgeführten Abschnitt (200) angebracht ist;
- einen hinteren Verbindungsarm (303), der ein erstes Ende (303a), das mit dem Mittelabschnitt des Maschinenkörpers (100) verbunden ist, und einen Verbindungsabschnitt (303b) aufweist, der von dem ersten Ende (303a) des hinteren Arms (303) entfernt ist und an dem handgeführten Abschnitt (200) angebracht ist, wobei die Verbindungsabschnitte (302b, 303b) an gegenüberliegenden Seiten des Befestigungselements (301) angeordnet sind; und
- eine Dämpfungsbaugruppe (304), die dazu ausgebildet ist, die vom Antriebsmotor (102) auf den handgeführten Abschnitt (200) übertragene Wechselkraft zu dämpfen, und ein elastisches Element umfasst, das zwischen dem vorderen Arm (302) und dem Befestigungselement (301) oder zwischen dem hinteren Arm (303) und dem Befestigungselement (301) angeordnet ist, wobei das elastische Element ausgerichtet auf einer Dämpfungsachse (Z) liegt, die parallel zur Hauptachse (X) und gegenüberliegend in Bezug auf das Befestigungselement (301) verläuft,
**dadurch gekennzeichnet, dass**:
- die Verbindungsabschnitte (302b, 303b) durch Scharniere (302c, 303c) definiert sind, die in einer verschiebbaren Position entlang des handgeführten Abschnitts (200) angeordnet sind und Schwingachsen definieren, die senkrecht zur Hauptachse (X) und zur Hilfsachse (Y) verlaufen; und
- die ersten Enden (302a, 303a) des vorderen und hinteren Arms (302, 303), insbesondere bei der Verbindung mit dem Maschinenkörper (100), Scharniere (302f, 303f) aufweisen, die mit gerillten elastischen Stopfen (105) versehen sind, um jeweilige Torsionsstopfen zu definieren, die der Drehung der Arme (302, 303) entgegenwirken.

2. Tragbares landwirtschaftliches Werkzeug nach Anspruch 1, wobei die Dämpfungsachse (Z) mit der Hilfsachse (Y) zusammenfällt.

3. Tragbares landwirtschaftliches Werkzeug nach Anspruch 1, wobei die Dämpfungsachse (Z) in Bezug auf die Hilfsachse (Y) versetzt ist.

4. Tragbares landwirtschaftliches Werkzeug nach einem der vorhergehenden Ansprüche, wobei die Dämpfungsbaugruppe (304) ein vorderes elastisches Element (304a), das zwischen dem vorderen Arm (302) und dem Befestigungselement (301) angeordnet ist, und ein hinteres elastisches Element (304b), das zwischen dem hinteren Arm (303) und dem Befestigungselement (301) angeordnet ist, umfasst, wobei das vordere elastische Element (304a) und das hintere elastische Element (304b) ausgerichtet auf der Hilfsachse (Y) und/oder auf einer Dämpfungsachse (Z) liegen, die parallel zur Hauptachse (X) und gegenüberliegend in Bezug auf das Befestigungselement (301) verläuft.

5. Tragbares landwirtschaftliches Werkzeug (1) nach Anspruch 4, wobei das vordere elastische Element (304a) zwischen dem Verbindungsabschnitt (302b) des vorderen Arms (302) und dem Befestigungselement (301) angeordnet ist und wobei das hintere elastische Element (304b) zwischen dem Verbindungsabschnitt (303b) des hinteren Arms (303) und dem Befestigungselement (301) angeordnet ist.

6. Tragbares landwirtschaftliches Werkzeug (1) nach Anspruch 5, wobei das vordere und hintere elastische Element (304a, 304b) miteinander koaxial sind und um die Hilfsachse (Y) herum angeordnet sind, insbesondere koaxial zur Hilfsachse (Y).

7. Tragbares landwirtschaftliches Werkzeug (1) nach einem der vorhergehenden Ansprüche 4 bis 6, wobei das vordere und hintere elastische Element (304a, 304b) elastische Stopfen und/oder rohrförmige Balgelemente (305) umfassen.

8. Tragbares landwirtschaftliches Werkzeug (1) nach einem der vorhergehenden Ansprüche 4 bis 7, wobei der vordere und hintere Arm (302, 303) jeweilige Druckflächen (302d, 303d) aufweisen, die in Kontakt mit dem jeweiligen vorderen oder hinteren elastischen Element (304a, 304b) angeordnet sind und dazu ausgebildet sind, eine Kompression des elastischen Elements (304a, 304b) infolge der Drehung des Arms (302, 303) und/oder der Translation des Arms (302, 303) in Bezug auf den handgeführten Stab (201) zu bestimmen, vorzugsweise um dieselbe Kompression des elastischen Elements (304a, 304b) infolge entgegengesetzter Drehungen des Arms (302, 303) und/oder infolge von Translationen des Arms (302, 303) in Bezug auf eine Referenzposition zu bestimmen.

9. Tragbares landwirtschaftliches Werkzeug (1) nach einem der vorhergehenden Ansprüche 4 bis 8, wobei das vordere elastische Element (304a) zwischen einem Mittelabschnitt des vorderen Arms (302) und dem Befestigungselement (301) angeordnet ist und wobei das hintere elastische Element (304b) zwischen einem Mittelabschnitt des hinteren Arms (303) und dem Befestigungselement (301) angeordnet ist, vorzugsweise so, dass die elastischen Elemente (304a, 304b) entlang einer Dämpfungsachse (Z) arbeiten, die parallel und versetzt in Bezug auf die Hilfsachse (Y) verläuft.

10. Tragbares landwirtschaftliches Werkzeug (1) nach Anspruch 9, wobei das vordere und hintere elastische Element (304a, 304b) in Form von Armen aus verformbarem Material (306), vorzugsweise elastomerem Material, ausgeführt sind, wobei die Arme aus verformbarem Material (306) vorzugsweise an einem ersten Ende direkt mit dem jeweiligen vorderen (302) oder hinteren (303) Arm und am anderen Ende mit einem entsprechenden Abschnitt des Befestigungselements (301) verbunden sind.

11. Tragbares landwirtschaftliches Werkzeug (1) nach einem der vorhergehenden Ansprüche 4 bis 10, wobei das vordere elastische Element (304a) und das hintere elastische Element (304b) sich in einem Vorspannungszustand oder in einem Vorkompressionszustand befinden.

12. Tragbares landwirtschaftliches Werkzeug (1) nach Anspruch 11, wobei das Befestigungselement (301) dazu ausgebildet ist, einen Wert des Vorspannungszustands oder des Vorkompressionszustands des vorderen elastischen Elements (304a) und/oder des hinteren elastischen Elements (304b) zu ändern.

13. Tragbares landwirtschaftliches Werkzeug (1) nach einem der vorhergehenden Ansprüche, wobei der Maschinenkörper (100) einen stabartigen Abschnitt umfasst, der koaxial zur Hauptachse (X) ist und auf dem ein vorderer Queransatz (104) und ein hinterer Queransatz (106) stabil angebracht sind, wobei der vordere Queransatz (104) und der hintere Queransatz (106) jeweils in exzentrischen Abschnitten in Bezug auf die Hauptachse (X) mit dem ersten Ende (302a) des vorderen Arms (302) und mit dem ersten Ende (303a) des hinteren Arms (303) verbunden sind; wobei sich der vordere Queransatz (104) und der hintere Queransatz (106) vorzugsweise von der Hauptachse (X) weg in die dem handgeführten Abschnitt (200) entgegengesetzte Richtung erstrecken und noch bevorzugter senkrecht zur Hauptachse (X) stehen.

## Revendications

1. Outil agricole portatif (1) destiné au jardinage ou à l'agriculture, comprenant:
- un corps de machine (100) comprenant une partie centrale s'étendant selon un axe principal et, montés sur des côtés opposés de la partie centrale (100a), un outil (101) et un moteur d'entraînement (102) dudit outil (101), ledit moteur d'entraînement (102) étant configuré pour générer une force alternative au moins selon ledit axe principal (X);
- une partie de préhension (200) pouvant être saisie de manière opérationnelle par un utilisateur et comprenant une tige de préhension (201) s'étendant selon un axe auxiliaire respectif (Y) parallèle audit axe principal (X);
- un dispositif de liaison (300) interposé entre la partie centrale dudit corps de machine (100) et ladite partie de préhension (200) afin de relier ledit corps de machine (100) en suspension à ladite partie de préhension (200), dans lequel ledit dispositif de liaison (300) comprend:
- un élément de fixation (301) solidaire de manière opérationnelle de ladite tige de préhension (201);
- un bras de liaison avant (302) ayant une première extrémité (302a) solidaire de ladite partie centrale du corps de machine (100) et une partie de liaison (302b), distante de ladite première extrémité (302a) du bras avant (302) et appliquée à ladite partie de préhension (200);
- un bras de liaison arrière (303) ayant une première extrémité (303a) solidaire de ladite partie centrale du corps de machine (100) et une partie de liaison (303b), distante de ladite première extrémité (303a) du bras arrière (303) et appliquée à ladite partie de préhension (200), dans lequel lesdites parties de liaison (302b, 303b) sont disposées sur des côtés opposés de l'élément de fixation (301); et
- un ensemble d'atténuation (304) configuré pour atténuer la force alternative transmise par le moteur d'entraînement (102) à la partie de préhension (200) et comprenant un élément élastique interposé entre le bras avant (302) et l'élément de fixation (301) ou interposé entre le bras arrière (303) et l'élément de fixation (301), ledit élément élastique s'étendant aligné sur un axe d'atténuation (Z) parallèle audit axe principal (X) et opposé par rapport audit élément de fixation (301),
**Caractérisé en ce que**:
- lesdites parties de liaison (302b, 303b) sont définies par des charnières (302c, 303c) disposées dans une position coulissante le long de la partie de préhension (200) et définissent des axes d'oscillation perpendiculaires audit axe principal (X) et audit axe auxiliaire (Y); et
- les premières extrémités (302a, 303a) des bras avant et arrière (302, 303), notamment au niveau de leur liaison au corps de machine (100), comprennent des charnières (302f, 303f) pourvues de bouchons élastiques rainurés (105) afin de définir des bouchons de torsion respectifs s'opposant à la rotation des bras (302, 303).

2. Outil agricole portatif selon la revendication 1, dans lequel ledit axe d'atténuation (Z) coïncide avec ledit axe auxiliaire (Y).

3. Outil agricole portatif selon la revendication 1, dans lequel ledit axe d'atténuation (Z) est décalé par rapport audit axe auxiliaire (Y).

4. Outil agricole portatif selon l'une quelconque des revendications précédentes, dans lequel l'ensemble d'atténuation (304) comprend un élément élastique avant (304a) interposé entre le bras avant (302) et l'élément de fixation (301), et un élément élastique arrière (304b) interposé entre le bras arrière (303) et l'élément de fixation (301), ledit élément élastique avant (304a) et ledit élément élastique arrière (304b) s'étendant alignés sur l'axe auxiliaire (Y) et/ou sur un axe d'atténuation (Z) parallèle audit axe principal (X) et opposé par rapport audit élément de fixation (301).

5. Outil agricole portatif (1) selon la revendication 4, dans lequel l'élément élastique avant (304a) est interposé entre la partie de liaison (302b) du bras avant (302) et l'élément de fixation (301), et dans lequel l'élément élastique arrière (304b) est interposé entre la partie de liaison (303b) du bras arrière (303) et l'élément de fixation (301).

6. Outil agricole portatif (1) selon la revendication 5, dans lequel lesdits éléments élastiques avant et arrière (304a, 304b) sont coaxiaux l'un par rapport à l'autre et disposés autour dudit axe auxiliaire (Y), notamment coaxiaux audit axe auxiliaire (Y).

7. Outil agricole portatif (1) selon l'une quelconque des revendications précédentes 4 à 6, dans lequel lesdits éléments élastiques avant et arrière (304a, 304b) comprennent des bouchons élastiques et/ou des éléments à soufflet tubulaire (305).

8. Outil agricole portatif (1) selon l'une quelconque des revendications précédentes 4 à 7, dans lequel lesdits bras avant et arrière (302, 303) comprennent des surfaces de poussée respectives (302d, 303d) disposées en contact avec l'élément élastique avant ou arrière respectif (304a, 304b) et configurées pour déterminer une compression de l'élément élastique (304a, 304b) à la suite de la rotation du bras (302, 303) et/ou de la translation dudit bras (302, 303) par rapport à ladite tige de préhension (201), de préférence pour déterminer la même compression de l'élément élastique (304a, 304b) à la suite de rotations opposées du bras (302, 303) et/ou à la suite de translations du bras (302, 303) par rapport à une position de référence.

9. Outil agricole portatif (1) selon l'une quelconque des revendications précédentes 4 à 8, dans lequel l'élément élastique avant (304a) est interposé entre une partie centrale du bras avant (302) et l'élément de fixation (301), et dans lequel l'élément élastique arrière (304b) est interposé entre une partie centrale du bras arrière (303) et l'élément de fixation (301), de préférence de sorte que lesdits éléments élastiques (304a, 304b) agissent selon un axe d'atténuation (Z) parallèle et décalé par rapport audit axe auxiliaire (Y).

10. Outil agricole portatif (1) selon la revendication 9, dans lequel lesdits éléments élastiques avant et arrière (304a, 304b) sont réalisés sous la forme de bras en matériau déformable (306), de préférence en élastomère, de préférence lesdits bras en matériau déformable (306) étant directement reliés, à une première extrémité, au bras avant (302) ou arrière (303) respectif et, à l'autre extrémité, à une partie correspondante de l'élément de fixation (301).

11. Outil agricole portatif (1) selon l'une quelconque des revendications précédentes 4 à 10, dans lequel l'élément élastique avant (304a) et l'élément élastique arrière (304b) sont dans un état de pré-tension ou dans un état de pré-compression.

12. Outil agricole portatif (1) selon la revendication 11, dans lequel ledit élément de fixation (301) est configuré pour modifier une valeur de l'état de pré-tension ou de l'état de pré-compression dudit élément élastique avant (304a) et/ou dudit élément élastique arrière (304b).

13. Outil agricole portatif (1) selon l'une quelconque des revendications précédentes, dans lequel le corps de machine (100) comprend une partie en forme de tige coaxiale audit axe principal (X) et sur laquelle sont montées de manière fixe une saillie transversale avant (104) et une saillie transversale arrière (106), ladite saillie transversale avant (104) et ladite saillie transversale arrière (106) étant respectivement reliées, au niveau de parties excentrées par rapport audit axe principal (X), à la première extrémité (302a) du bras avant (302) et à la première extrémité (303a) du bras arrière (303); de préférence, ladite saillie transversale avant (104) et ladite saillie transversale arrière (106) s'étendant à l'écart de l'axe principal (X) dans la direction opposée à la partie de préhension (200) et, de manière préférée, étant perpendiculaires à l'axe principal (X).
